# EUROPEAN PATENT SPECIFICATION

(11) **EP 3 618 500 B1**
(45) Date of publication and mention of the grant of the patent: **28.09.2022**
(21) Application number: 17923290.5
(22) Date of filing: 29.08.2017
(51) Int. Cl.: H04W 36/02, H04W 36/08, H04W 40/36

(54) **PATH SWITCHING METHOD AND BASE STATION**
WEGUMSCHALTVERFAHREN UND BASISSTATION
PROCÉDÉ DE COMMUTATION DE TRAJET ET STATION DE BASE

(43) Date of publication of application: 04.03.2020
(73) Proprietor: GUANGDONG OPPO MOBILE TELECOMMUNICATIONS CORP., LTD., Wusha, Chang'an Dongguan, Guangdong 523860 (CN)
(72) Inventor: YANG, Ning, Dongguan Guangdong 523860 (CN); LIU, Jianhua, Dongguan Guangdong 523860 (CN)
(74) Representative: Rossi, Ugo
(86) International application number: PCT/CN2017/099530
(87) International publication number: WO 2019/041142

(56) References cited:
- WO-A1-2015/133837
- CN-A- 101 938 798
- CN-A- 102 598 786
- CN-A- 104 363 621
- CN-A- 104 602 307
- US-A1- 2013 089 022
- US-A1- 2016 249 259
- US-A1- 2017 245 184
- MCC Support: "Final Report of 3GPP TSG RAN WG1 #94 v1.0.0 (Gothenburg, Sweden, 20th 24th August 2018)", 3GPP Draft; RP-1810051_report_RAN_94_Gothenburg_161118 , vol. RAN WG1, 18 November 2016 (2016-11-18), pages 1-194, XP051517464,

## Description

### Technical Field

Embodiments of the present application relate to a field of wireless communication filed, and more particularly, relate to a path switch method and a base station.

### Background

Handover is a basic mobility management function in Long Term Evolution (LTE) and 5G New Radio (NR) systems. After a terminal device moves, it may be necessary to disconnect a signaling connection and a data bearer with a source base station and establish a signaling connection and a data bearer with a target base station. In this process, signaling interaction and data forwarding need to be generated between the terminal and the base station, as well as between the base station and network elements of a core network. When the terminal device performs a handover frequently between base stations, a large amount of signaling interactions will be caused, thus increasing loading of the base station and the core network, and a throughput of transmission of service data on the mobile terminal may fluctuate.

The documents US2017/245184 A1, US2013/089022 A1 and US2016/249259 A1 have disclosed the related art of the present disclosure.

### Summary

Embodiments of the present application provide a path switch method and a base station, which may reduce signaling overhead between a base station and a core network when a terminal device performs a handover between base stations.

The above effect is achieved by a method according to claim 1 or claim 5 and a base station according to claim 11 or 12. . Further improvements and implementations are provided in the dependent claims.

### Brief Description of Drawings

FIG. 1 is a schematic architecture diagram of an application scenario according to an embodiment of the present application.
FIG. 2 is a flowchart of interaction in a conventional path switch method.
FIG. 3 is a schematic flowchart of a path switch method according to an embodiment of the present application.
FIG. 4 is a schematic diagram of paths according to an embodiment of the present application.
FIG. 5 is a flowchart of interaction in a path switch method according to an embodiment of the present application.
FIG. 6 is a schematic flowchart of a path switch method according to an embodiment of the present application.
FIG. 7 is a schematic block diagram of a target base station according to an embodiment of the present application.
FIG. 8 is a schematic block diagram of a first base station according to an embodiment of the present application.
FIG. 9 is a schematic structural diagram of a target base station according to an embodiment of the present application.
FIG. 10 is a schematic structural diagram of a first base station according to an embodiment of the present application.
FIG. 11 is a schematic structural diagram of a system chip according to an embodiment of the present application.

### Detailed Description

Embodiments of the invention are those whose scope is within that of the appended claims. Other passages stating embodiments which do not fall under the scope of the appended claims are to be considered as examples.

Hereinafter, technical solutions in embodiments of the present application will be described with reference to the accompanying drawings.

In should be understood that the technical solutions in the embodiments of the present application may be applied in various communication systems, for example, a Long Term Evolution (LTE) system, an LTE Time Division Duplex (TDD) system, a Universal Mobile Telecommunication System (UMTS), and a future 5G communication system.

Various embodiments are described in connection with a terminal device in the present application. The terminal device may also refer to a User Equipment (UE), an access terminal, a subscriber unit, a subscriber station, a mobile station, a mobile platform, a remote station, a remote terminal, a mobile device, a user terminal, a terminal, a wireless communication device, a user agent, or a user apparatus. The access terminal may be a cellular phone, a cordless phone, a Session Initiation Protocol (SIP) phone, a Wireless Local Loop (WLL) station, a Personal Digital Assistant (PDA), a handheld device with a wireless communication function, a computing device or other processing device connected to a wireless modem, an on-board device, a wearable device, a terminal device in a future 5G network, or a terminal device in a future evolving Public Land Mobile Network (PLMN), etc.

Various embodiments are described in combination with a base station in the present application. The base station may be a device for communicating with a terminal device, for example, may be an Evolutional Node B (eNB or eNodeB) in an LTE system, or the base station may be a relay station, an access point, an on-board device, a wearable device, a base station in a future 5G network, etc.

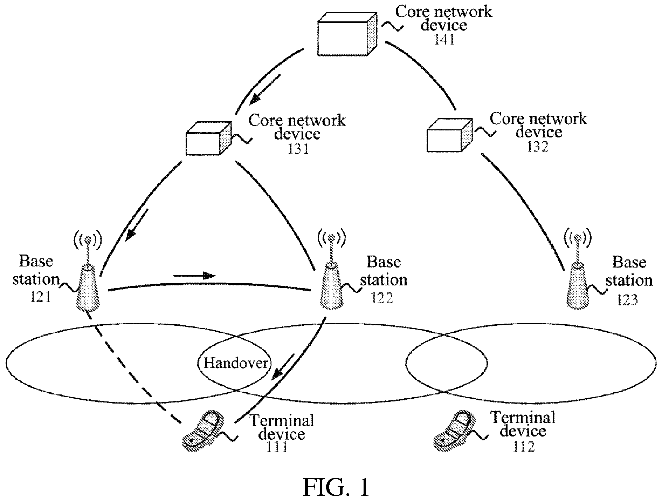

FIG. 1 is a schematic diagram of an application scenario according to an embodiment of the present application. The communication system in FIG. 1 may include a core network device 141, a core network device 131 and a core network device 132, base stations 121 to 123, a terminal device 111 and a terminal device 112. The core network device 141 may be, for example, a Packet Data Network GateWay (PGW); the base station 121, the base station 122, and the base station 123 may be, for example, an eNB in the LTE system or a gNB in a 5G system.

In the LTE system, the core network device 131 and the core network device 132 may be, for example, a Serving Gateway (SGW) or a Mobility Management Entity (MME). In the 5G system, the core network device 131 and the core network device 132 may be, for example, an Access and Mobility Management Function (AMF) or a User Port Function (UPF). In the following description with reference to FIG. 1, the LTE network is taken as an example, but the path switch method described in an embodiment of the present application may also be applied to the 5G network. As shown in FIG. 1, an SGW 131 is taken as an example of the core network device 131, an SGW 132 is taken as an example of the core network device 132, and a PGW 141 is taken as an example of the core network device 141, a direct communication may be performed through an X2 interface between base stations.

The base stations 121-123 are used for providing communication services for the terminal device 111 and the terminal device 112 and accessing to a core network. The terminal device 111 and the terminal device 112 may access the network by searching signals sent by the base station 121, the base station 122 or the base station 123, to communicate with the network. FIG. 1 is only a simplified schematic diagram by way of example, the network may also include other terminal device, access network device and core network device, which are not shown in FIG. 1.

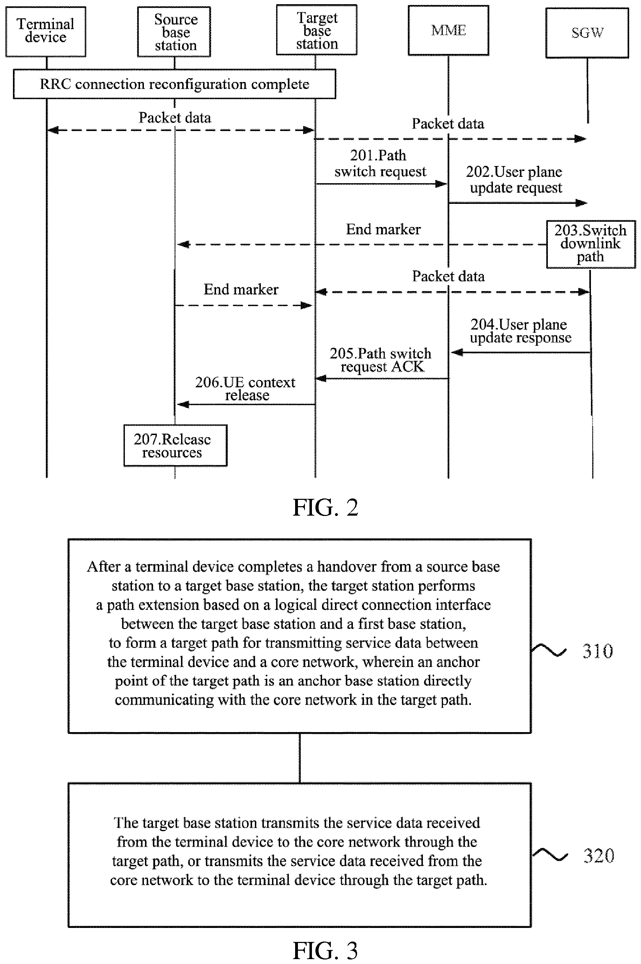

Two typical handover scenarios are described with reference to FIG. 1. For the first Handover (HO) scenario, it may be called as an inter-base station, intra SGW handover (inter-eNB intra SGW HO). As shown in FIG. 1, when the terminal device 111 performs a handover from the base station 121 (the source base station) to the base station 122 (the target base station), the data connection of the terminal device 111 is switched from the base station 121 to the base station 122, the base station 121 and the base station 122 are connected with the same SGW, i.e. SGW 131. Since the SGW remains unchanged after the terminal device 11 performs the handover of base station, the path switch may be performed through the conventional path switch to establish a path for transmitting the service data. After the handover of the air interface is completed, the target base station, namely the base station 122, triggers Path Switch to the MME, and the MME triggers the SGW 131 to modify and establish a downlink Tunnel Endpoint Identifier (TEID) to complete configuration of User Plane of general packet radio service (GPRS) tunnel protocol (GTP-U). This process needs to trigger two times of interactive signaling to the core network, which will be described in detail later with reference to FIG. 2.

For the second handover scenario, it may be called as an inter-base station, inter-SGW handover (inter-eNB inter SGW HO). As shown in FIG. 1, when the terminal device 112 performs a handover from the base station 122 (the source base station) to the base station 123 (the target base station), the data connection of the terminal device 112 is switched from the base station 122 to the base station 123, the base station 122 and the base station 123 are connected with SGW 131 and SGW 132 respectively. Since the base station 122 and the base station 123 are connected with different SGWs, that is, the SGW changes after the terminal device 112 performs the handover of base station, or it may called as inter-SGW, then the terminal device 112 will normally perform the path switch of S1 interface to establish a path for transmitting the service data.

The present application relates to the first scenario described above. First, the process of Path Switch in existing LTE will be described with reference to FIG. 2. Before the acts shown in FIG. 2, a terminal device will first performs a handover from a source base station to a target base station, the specific process of handover is irrelevant to an embodiment of the present application, and the handover from the source base station to the target base station, i.e. handover of the air interface, may be completed by referring to the prior art, so that the terminal device may successfully access the target cell, which will not be repeated here. When the handover of the air interface is completed, the path switch may be completed according to the solution shown in FIG. 2. The terminal device in FIG. 2 may be, for example, the terminal device 111 in FIG. 1, the source base station in FIG. 2 may be, for example, the base station 121 in FIG. 1, the target base station may be, for example, the base station 122 in FIG. 1, and the SGW in FIG. 2 may be, for example, the SGW 131 in FIG. 1.

As shown in FIG. 2, the terminal device sends a Radio Resource Control (RRC) connection reconfiguration complete message to the target base station, after confirming that the handover is successful, the target eNB may start transmitting data to the UE. The terminal may then perform acts 201 to 207 to complete the path switch.

In 201, the target base station sends a path switch request message to the MME to inform the MME that the terminal device has changed the cell. At this time, the handover of the air interface has been successfully completed.

In 202, the MME sends a user plane update request message, i.e., a Modify Bearer Request, to the SGW.

In 203, the SGW performs a Switch Downlink Path to switch the downlink data path to the target base station side. The SGW sends one or more "End Marker" packets to the source base station on an old path, then may release the user plane resources of the source base station.

In 204, the SGW sends a user plane update response message, i.e., Modify Bearer Response, to the MME.

In 205, the MME sends a Path Switch Request Acknowledgement (ACK) message to the target base station.

In acts 201-205, the path switch process is completed, the purpose of which is to switch the data path of the user plane from the source base station to the target base station.

In 206, the target base station sends a UE Context Release message to the source base station, informs the source base station of the success of the handover and triggers the resource release of the source base station. The target base station sends a UE Context Release message after receiving the path switch ACK message sent back from the MME.

In 207, after the source base station receives the UE context release message sent by the target base station, the source base station may release the radio bearer and the control plane resources related to the UE context.

Referring to FIG. 1, before the path switch is completed, the path for transmitting the service data between the terminal device and the core network includes the PGW 141→the SGW 131→ the base station 121 (the source base station) →the terminal device 111 in FIG. 1. After the path switch is completed, the path for transmitting the service data becomes the PGW 141→the SGW 131→ the base station 122 (the target base station) →the terminal device 111. It can be seen that an Anchor point of the path of the user plane is the SGW 131. No matter the terminal device performs a handover to which base station connected with the SGW 131, the service data is transmitted between the terminal device and the core network through the SGW 131.

As can be seen from FIG. 2, if the terminal device frequently performs a handover between the base stations, it will lead to a large amount of signaling interaction with the core network, thus increasing the load of the base station and the core network, and the throughput fluctuation of service data transmission on the mobile terminal may be caused. For a high bandwidth service flow, it is likely to lead to degradation of quality of audio or video image, the degradation is embodied as noise or discontinuity for the audio service, and as the appearance of Mask for the video service. For network facilities, a large amount of unnecessary signaling will also increase the load of signaling processing.

In an embodiment of the present application, after the terminal device completes the handover from the source base station to the target base station, the path extension is performed through the logical direct connection interface between the base stations to form the target path for transmitting the service data, so that the anchor point of the target path is the anchor base station directly communicating with the core network in the target path. Thereby, the service data is transmitted between the terminal device and the core network through the anchor base station no matter how the terminal device performs a handover between the base stations, and large signaling overhead generated between the base station and the core network during path handover is avoided.

An embodiment of the present application may be suitable for any scenarios of the path switch, especially for localized mobility management, such as scenarios in which small base stations (especially suitable for a 5G millimeter wave) are deployed in enterprises or indoors, and terminals may move back and forth, while remaining within a certain area with a great probability. In this scenario, the logical direct connection interface may be implemented based on optical fibers or other local communication links with high bandwidth and low delay. Therefore, in an embodiment of the present application, the original Quality of Service (QoS) requirement may still be implemented in the switched data path due to the small number of hops during the path switch.

An embodiment of the present application is not only suitable for a single-connection scenario described above, but also suitable for a handover between a Main eNB (MeNB) and a Secondary eNB (SeNB) in a dual-connection scenario. When roles of the MeNB and the SeNB change, if Path Switch is performed immediately, and then, since the terminal returns to the previous cell, or due to an improper role change caused by a Ping-Pong handover (Ho), it is necessary to initiate the path switch to the core network again, which will also lead to a large amount of signaling interactions between the base station and the core network. Through the path switch method of an embodiment of the present application, when the terminal device performs a handover between the main base station and the secondary base station, the signaling overhead between the base station and the core network may be reduced.

FIG. 3 is a schematic flowchart of a path switch method according to an embodiment of the present application. The method shown in FIG. 3 may be performed by a target base station, which may be, for example, the base station 122 shown in FIG. 1. As shown in FIG. 3, the path switch method includes following acts.

In 310, after a terminal device completes a handover from a source base station to a target base station, the target base station performs a path extension based on a logical direct connection interface between the target base station and a first base station to form a target path for transmitting service data between the terminal device and a core network, wherein an anchor point of the target path is an anchor base station directly communicating with the core network in the target path.

In 320, the target base station transmits the service data received from the terminal device to the core network through the target path, or transmits the service data received from the core network to the terminal device through the target path.

Specifically, after the terminal device completes the handover from the source base station to the target base station, the target base station may perform the path extension based on the logical direct connection interface between the target base station and the first base station to form the target path including the first base station and the target base station, and the target path is used for transmitting the service data between the terminal device and the core network. The first base station may be any base station with the logical direct connection interface in the target path, and the first base station may communicate with the core network device through the anchor base station.

The logical direct connection interface described in an embodiment of the present application is an interconnection interface between the base stations, and supports direct transmission of data and signaling. For example, in the LTE system, the logical direct connection interface between the base stations is an X2 interface, and the target base station may perform the path extension (or called X2 path extension) based on the X2 interface to establish the target path for transmitting service data. For example, in a 5G system, the logical direct connection interface between the base stations is an Xn interface, and the target base station may perform the path extension (or Xn path extension) based on the Xn interface between the base stations to establish the target path.

Therefore, after the terminal device completes the handover from the source base station to the target base station, the target base station performs the path extension through the logical direct connection interface between the target base station and the first base station to form the target path for transmitting the service data, so that the anchor point of the target path is the anchor base station directly communicating with the core network in the target path. Thereby, the service data is transmitted between the terminal device and the core network through the anchor base station no matter how the terminal device performs a handover between the base stations, thus avoiding large signaling overhead generated between the base station and the core network during the path switch.

In particular, the first base station may be, for example, the source base station.

In other words, when the terminal device completes the handover from the source base station to the target base station, the source base station is selected as the first base station for performing the path extension, that is, the target base station performs the path extension based on the logical direct connection interface between the target base station and the source base station to form the target path including the source base station and the target base station.

The first base station may transmit the service data with the core network through the anchor base station, or, in particular, the first base station itself may be the anchor base station.

That is, when the first base station is the anchor base station, the first base station does not need to transmit the service data of the terminal device with the core network through the anchor base station, but may directly transmit the service data of the terminal device received from the target base station to the core network or receive the service data transmitted by the core network.

For example, it is assumed that the source base station is selected by the terminal device as the first base station to perform the path extension, and the first base station (the source base station) is the anchor base station. For example, as shown in FIG. 1, the target base station is the base station 122 shown in FIG. 1, the source base station is the base station 121 shown in FIG. 1, and the terminal device is the terminal device 111 shown in FIG. 1. After the terminal device 111 performs a handover from the base station 121 to the base station 122, the base station 122 performs the path extension based on the interface X2 between the base station 121 and the base station 122. After the path extension is performed, the target path for transmitting data between the terminal device and the core network may be formed, which includes, for example, a core network device, the source base station, the target base station and the terminal device in sequence.

Taking FIG. 1 as an example, as shown in FIG. 1, before the path extension is performed, the path for transmitting the service data may include the PGW 141→the SGW 131→the base station 121 (the source base station) →the terminal device 111 in FIG. 1. After the path extension is performed, an acquired target path may be the PGW 141→the SGW 131→ the base station 121 (the source base station) → the base station 122 (the target base station) → the terminal device 111. It can be seen that the Anchor point of the path of the user plane is the base station 121, that is, the source base station. No matter the terminal device performs a handover to which base station connected to the SGW 131, the service data may be transmitted between the terminal device and the core network through the base station 121. Therefore, the base station 122, i.e., the target base station, does not need to perform signaling interaction with the core network, and only needs to perform simple signaling interaction with the base station 121, i.e., the source base station, to complete the path switch.

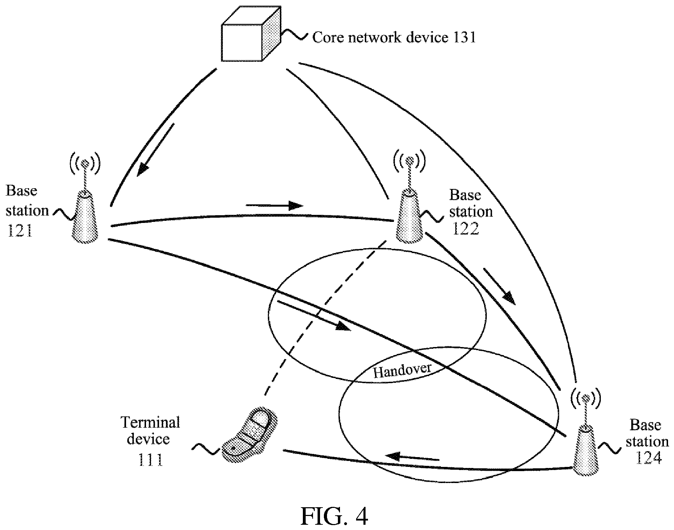

If the first base station is not the anchor base station, the first base station connects and communicates with the core network device such as an SGW through the anchor base station, then the target path may include at least the anchor base station, the first base station, the target base station and the terminal device in sequence. After the terminal device performs a handover to any one of the base stations under the SGW, the service data is all transmitted between the terminal device and the core network through the anchor base station. The following is a detailed description taking FIG. 4 as an example.

FIG. 4 includes a core network device 131, base stations 121 to 123, and a terminal device 111. The base station 121, the base station 122 and the base station 123 may be, for example, an eNB in the LTE system or a gNB in the 5G system.

In the LTE system, the core network device 131 may be, for example, SGW or MME, and in the 5G system, the core network device 131 may be, for example, AMF or UPF. In the following description with reference to FIG. 4, an LTE network is taken as an example, but the path switch method described in an embodiment of the present application may also be applied to a 5G network. As shown in FIG. 4, an SGW 131 is taken as an example of the core network device 131, and the logical direct connection interface between the base stations is an X2 interface.

For example, the path shown in FIG. 4, after the terminal device performs a handover from the base station 122 to the base station 124, the target base station may request a path extension from any base station with an X2 interface in the path. As shown in FIG. 4, the SGW 131 is connected with the base station 121, the base station 122, and the base station 124, the base station 121 is the anchor base station. The source base station of the terminal device is the base station 122, after the terminal device performs a handover to the target base station 124, since both the base station 121 and the base station 122 have X2 interfaces, the base station 124, that is, the target base station, may perform a path extension with any one of the base stations 121 and 122. The base station, which no longer serves the terminal device 111 after the path extension is performed, may release the context related to the terminal device.

If the base station 124 selects the base station 122 as the first base station, that is, the first base station is the source base station, then the target base station performs the path extension based on an X2 interface between the base station 122 and the base station 124. The established target path is as follows in FIG. 4: the SGW 131→the base station 121 (the anchor base station) → the base station 122 (the source base station) → the base station 124 (the target base station) → the terminal device 111.

If the base station 124 selects the base station 121 as the first base station, that is, the first base station is the anchor base station, then the target base station performs the path extension based on an X2 interface between the base station 121 and the base station 124. The target path formed after the X2 path extension in FIG. 4 is: the SGW 131→ the base station 121 (the anchor base station) →the base station 124 (the target base station) →the terminal device 111. In this way, there is no need to pass through the source base station 122 in the path, thus reducing the number of hops in the target path.

In at least one implementation, in 310, that the target base station performs the path extension based on the logical direct connection interface between the target base station and the first base station, includes: when an extension condition is satisfied, the target base station performs the path extension, wherein the extension condition includes at least one of the following conditions:
Condition 1: both the target base station and the source base station connect with the same core network device;
Condition 2: the number of hops of the target base station relative to the anchor base station in the target path does not exceed a preset threshold;
Condition 3: a time point at which the target base station performs the path extension is within a preset time period;
Condition 4: the target base station is located in a preset area.

Specifically, for Condition 1, for example, as shown in FIG. 1, if it is the inter-eNB inter SGW HO scenario, the target base station may initiate the path switch mode shown in FIG. 2 due to inter-SGW between the source base station and the target base station. If it is the inter-eNB intra SGW HO scenario, since there is no inter-SGW between the source base station and the target base station, the target base station performs the path extension according to an embodiment of the present application.

The core network device connected with the target base station and the source base station described in Condition 1 is the core network device directly communicating with the target base station and the source base station, such as SGW/MME or AMF/UPF.

For example, as shown in FIG. 1, when the terminal device 111 performs a handover from the base station 121 (the source base station) to the base station 122 (the target base station), the base station 121 and the base station 122 are connected with the same SGW, that is, SGW 131, since the SGW is unchanged after the terminal device performs the handover between base stations, the target path may be established by the path extension.

For Condition 2, if the target base station initiates the path extension to the first base station with the logical direct connection interface, the target path to be established may include more base station nodes, that is, the number of hops of the target base station relative to the anchor base station is large, then the path extension may not be performed at this time. The path extension is performed only when the number of hops of the target base station relative to the anchor base station is less than a preset threshold. For example, assuming that the preset threshold is 4, as shown in FIG. 4, if the target path to be established is the SGW 131→ the base station 121 (the anchor base station) →the base station 122 (the source base station) → the base station 123 (the target base station) → terminal device 111, then the number of hops of the target base station relative to the anchor base station in the path is 3, 3 is less than 4, and thus the path extension may be performed to establish that path.

For Condition 3, for example, a timer may be started, and the path extension may be performed before the timer expires. After the timer expires, the path extension is not performed, but a target path may be established by other ways, such as initiating the path switch shown in FIG. 2.

For Condition 4, an area range may be defined, the path extension may be performed if the target base station is within the defined area range. If the target base station is no longer within the defined area range, the target path may be established by other ways such as initiating the path switch process shown in FIG. 2.

The above four conditions may be combined arbitrarily or used alone as the extension condition for determining whether to perform the path extension, and this is not restricted here.

Further, in at least one implementation, before 310, that is, before the target base station performs the path extension based on the logical direct connection interface between the target base station and the first base station, the method further includes: the target base station receives configuration information sent by MME or AMF, the configuration information includes the extension condition; or the target base station acquires the extension condition according to an operation administration and maintenance (OAM) mode.

Specifically, the extension condition may be configured by MME or AMF for the target base station, and the MME or AMF sends the configuration information to the target base station to indicate the extension condition.

Alternatively, the extension condition may be preconfigured by Operation Administration and Maintenance (OAM), and the target base station determines whether to perform the path extension according to the preconfigured extension condition.

In at least one implementation, before 310, that is, before the target base station performs the path extension based on the logical direct connection interface between the target base station and the first base station, the method further includes: the target base station determines that the connection on the logical direct connection interface has been established between the target base station and the first base station.

In at least one implementation, in 310, that the target base station performs the path extension based on the logical direct connection interface between the target base station and the first base station, includes: the target base station sends a request message to the first base station, the request message is used for requesting to perform the path extension; the target base station receives a feedback message sent by the first base station, the feedback message indicates that the path extension is completed.

After the target base station sends the request message to the first base station, if the first base station is the source base station, the first base station may release the context of the terminal device based on the request message, but parameters related to GTP-U of the logical direct connection interface should be retained. While, the first base station also needs to maintain a mapping relationship between the S1 bearer of the core network and the bearer on the logical direct connection interface of the base station.

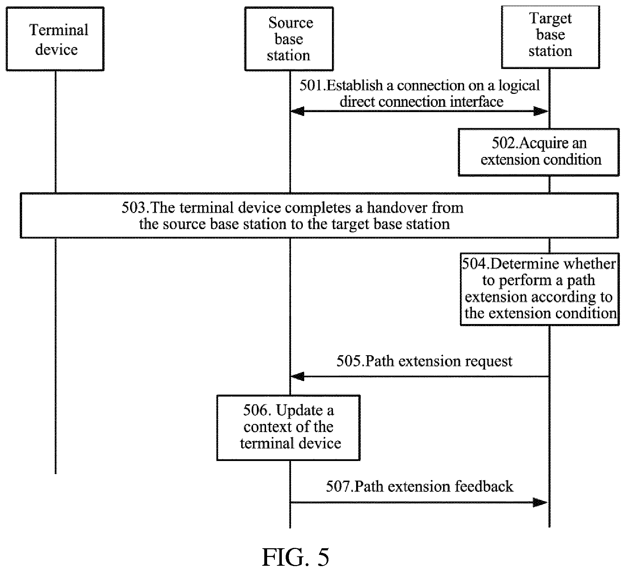

Next, taking FIG. 5 as an example, a process of establishing a path extension between a target base station and a first base station will be described in detail. Assuming that a terminal device selects a source base station as the first base station and the first base station is an anchor base station, as shown in FIG. 5, the process of the path switch may include following acts.

In 501, a connection on a logical direct connection interface is established between the source base station and the target base station.

In 502, the target base station acquires an extension condition.

In 503, the terminal device performs a handover from the source base station to the target base station.

In 504, the target base station determines whether to perform a path extension according to the extension condition.

In 505, if the extension condition is satisfied, the target base station sends a request message, that is, a path extension request, to the source base station to request the path extension.

In 506, after receiving the path extension request, the source base station updates a context of the terminal device.

The source base station releases parameters related to RRC operation of the terminal device and retains parameters related to GTP-U on the logical direct connection interface. While, the source base station also needs to maintain a mapping relationship between the S1 bearer of the core network and the bearer of the logical direct connection interface (such as X2 interface or Xn interface) of the base station.

In 507, the source base station sends a feedback message, that is, a path extension feedback, to the target base station to inform the target base station that the source base station itself has updated the context of the terminal device, the path extension is completed, and the target path may start to be used for transmitting the service data of the terminal device.

After that, the terminal device may transmit the service data to the target base station, and the target base station transmits the service data to the source base station, and the source base station transmits the service data to the core network; or the core network transmits the service data of the terminal device to the source base station, the source base station transmits the service data to the target base station, and the target base station transmits the service data to the terminal device.

As can be seen, compared with the path switch mode shown in FIG. 2, the path extension mode of an embodiment of the present application obviously reduces the signaling interaction between the base station and the core network, and may greatly reduce the load of the base station and the core network especially when the terminal device performs a ping-pong handover or performs a handover frequently.

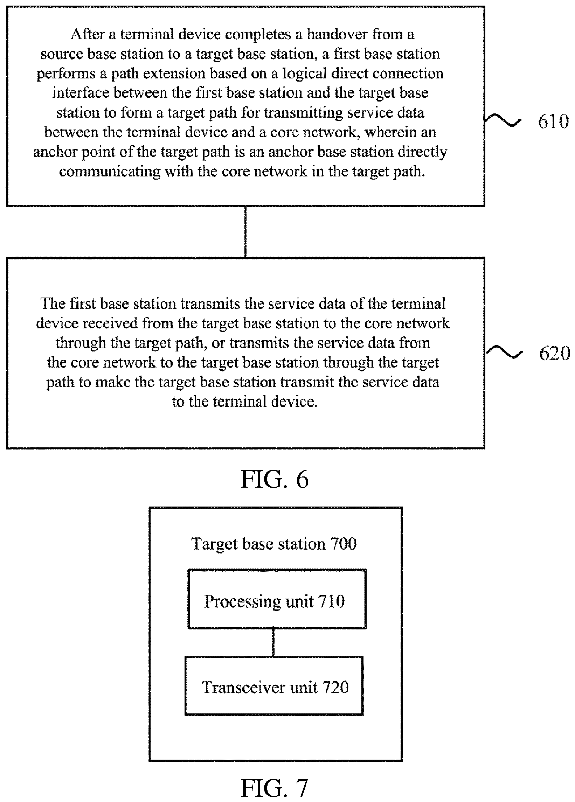

FIG. 6 is a schematic flowchart of a path switch method according to an embodiment of the present application. The method shown in FIG. 6 may be performed by a first base station, which may be, for example, the base station 121 or the base station 122 shown in FIG. 1 or FIG. 4. As shown in FIG. 6, the path switch method includes following acts.

In 610, after a terminal device completes a handover from a source base station to a target base station, the first base station performs a path extension based on a logical direct connection interface between the first base station and the target base station to form a target path for transmitting service data between the terminal device and a core network, wherein an anchor point of the target path is an anchor base station directly communicating with the core network in the target path.

In 620, the first base station transmits the service data of the terminal device received from the target base station to the core network through the target path, or transmits the service data from the core network to the target base station through the target path to make the target base station transmit the service data to the terminal device.

Specifically, after the terminal device completes the handover from the source base station to the target base station, the first base station may perform the path extension based on the logical direct connection interface between the target base station and the first base station to form the target path including the first base station and the target base station, and the target path is used for transmitting the service data between the terminal device and the core network. The first base station is any base station with the logical direct connection interface in the target path, and the first base station may communicate with a core network device through the anchor base station.

Therefore, after the terminal device completes the handover from the source base station to the target base station, the first base station performs the path extension through the logical direct connection interface between the first base station and the target base station to form the target path for transmitting the service data, so that the anchor point of the target path is the anchor base station directly communicating with the core network in the target path. Thereby, the service data is transmitted between the terminal device and the core network through the anchor base station no matter how the terminal device performs a handover the base stations, thus avoiding large signaling overhead generated between the base station and the core network during the path switch.

In particular, the first base station may be, for example, the source base station.

In other words, when the terminal device completes the handover from the source base station to the target base station, the source base station may be selected as the first base station for performing the path extension, that is, the source base station may perform the path extension based on the logical direct connection interface between the target base station and the source base station to form the target path including the source base station and the target base station.

The first base station may transmit the service data with the core network through the anchor base station, or, in particular, the first base station itself may be the anchor base station.

That is, when the first base station is the anchor base station, the first base station does not need to transmit the service data of the terminal device with the core network through the anchor base station, but may directly transmit the service data of the terminal device received from the target base station to the core network or receive the service data transmitted by the core network.

For example, as shown in FIG. 1, assuming that the target base station, i.e. the base station 122, selects the source base station, i.e. the base station 121, as the first base station for performing the path extension, and the first base station (the source base station) is the anchor base station, before the path extension is performed, the path for transmitting the service data may include the PGW 141→the SGW 131→ the base station 121 (the source base station) → the terminal device 111 in FIG. 1, after the path extension is performed, the acquired target path may be the PGW 141→the SGW 131→ the base station 121 (the source base station) → the base station 122 (the target base station) → the terminal device 111. It can be seen that the Anchor point of the path of the user plane is the base station 121, i.e. the source base station. No matter the terminal device performs a handover to which base station connected with the SGW 131, the service data may be transmitted between the terminal device 111 and the core network through the base station 121. Therefore, the base station 122, i.e. the target base station, does not need to perform complicated signaling interaction with the core network, and only needs to perform simple signaling interaction with the base station 121, i.e. the source base station, to complete the path switch.

If the first base station is not the anchor base station, the first base station connects and communicates with the core network device such as an SGW through the anchor base station, then the target path may include at least the anchor base station, the first base station, the target base station and the terminal device in sequence. After the terminal device performs a handover to any one of the base stations under the SGW, the service data is all transmitted between the terminal device and the core network through the anchor base station.

For example, as shown in FIG. 4, after the terminal device performs a handover from the base station 122 to the base station 124, the target base station may request the path extension from any base station with an X2 interface in the path. As shown in FIG. 4, the SGW 131 is connected with the base station 121, the base station 122, and the base station 124, and the base station 121 is the anchor base station. The source base station of the terminal device is the base station 122. After the terminal device performs a handover to the target base station 124, since both the base station 121 and the base station 122 have the interface X2, the base station 124, i.e., the target base station, may request the path extension with any one of the base stations 121 and 122. After the path extension is performed, the base station that no longer serves the terminal device 111 may release the context related to the terminal device.

If the base station 124 selects the base station 122 as the first base station, i.e., the first base station is the source base station, then the base station 122 may determine to perform the path extension based on an X2 interface between the base station 122 and the base station 124 according to the request message for requesting the path extension sent by the base station 124. The established target path is as follows in FIG. 4: the SGW 131→ the base station 121 (the anchor base station) → the base station 122 (the source base station) → the base station 124 (the target base station) → the terminal device 111.

If the base station 124 selects the base station 121 as the first base station, i.e., the first base station is the anchor base station, then the base station 121 may determine to perform the path extension based on an X2 interface between the base station 121 and the base station 124 according to the request message sent by the base station 124. After the path extension is performed, the formed target path in FIG. 4 is the SGW 131→the base station 121 (the anchor base station) → the base station 124 (the target base station) → the terminal device 111. In this way, there is no need to pass through the source base station 122 in the path, thus reducing the number of hops in the target path.

In at least one implementation, before the first base station performs the path extension based on the logical direct connection interface between the first base station and the target base station, the method further includes: the first base station determines that the connection on the logical direct connection interface has been established between the first base station and the target base station.

In at least one implementation, before the first base station performs the path extension based on a logical direct connection interface between the first base station and the target base station, the method further includes: the first base station receives a request message sent by the target base station, and the request message is used for requesting the path extension.

That the first base station performs the path extension based on the logical direct connection interface between the first base station and the target base station, includes: the first base station performs the path extension based on the logical direct connection interface between the first base station and the target base station according to the request message.

In at least one implementation, that the first base station performs the path extension based on the logical direct connection interface between the first base station and the target base station, includes: when an extension condition is satisfied, the first base station performs the path extension, wherein the extension condition includes at least one of the following conditions: the target base station and the source base station both connect with the same core network device; the number of hops of the target base station relative to the anchor base station in the target path does not exceed the preset threshold; a time point at which the target base station performs the path extension is within the preset time period; and the target base station is located in the preset area range.

In at least one implementation, before the first base station performs the path extension based on the logical direct connection interface between the first base station and the target base station, the method further includes: the first base station receives configuration information sent by a mobility management entity (MME) or an AMF, the configuration information includes the extension condition; or the first base station acquires the extension condition according to an operation administration and maintenance (OAM) mode.

In at least one implementation, that the first base station performs the path extension based on the logical direct connection interface between the first base station and the target base station, includes: the first base station updates the context of the terminal device; the first base station sends feedback information to the target base station, and the feedback information is used for indicating that the path extension is completed.

For example, after receiving the request message sent by the target base station, the first base station may determine whether to receive the path extension initiated by the target base station according to the extension condition. If the first base station determines that the extension condition is satisfied, the first base station accepts the request message, performs the path extension according to the request message, updates the context information of the terminal device, and returns the feedback message for the request message to the target base station. If it is determined that the extension condition is not satisfied, the first base station may reject the path extension initiated by the target base station.

In at least one implementation, that the first base station updates the context of the terminal device, includes: the first base station releases parameters related to radio resource control (RRC) operation of the terminal device, and retains parameters related to user plane of general packet radio service (GPRS) tunnel protocol (GTP-U) of the logical direct connection interface.

If the first base station itself does not have the parameter context information related to RRC operation of the terminal device, then there is no need to release the context information, only the parameters related to GTP-U of the logical direct connection interface need to be acquired, and a mapping relationship between the S1 bearer of the core network and the bearer on the logical direct connection interface of the base station is maintained.

It should be understood that the process of the path extension performed by the first base station may specifically refer to the relevant acts of the target base station in FIGs. 3 to 5, and the specific details for the first base station in the path extension process may also refer to the relevant descriptions for the target base station in FIGs. 3 to 5, which will not be repeated here for brevity.

It should be understood that in various embodiments of the present application, sizes of sequence numbers in the aforementioned processes do not indicate an order of execution, and the order of execution of various processes should be determined by their functions and internal logics, and should not constitute any limitation on implementation processes of embodiments of the present application.

FIG. 7 is a schematic block diagram of a target base station 700 according to an embodiment of the present application. As shown in FIG. 7, the target base station 700 includes a processing unit 710 and a transceiver unit 720.

The processing unit 710 is used for performing a path extension based on a logical direct connection interface between a first base station and the target base station after a terminal device completes a handover from a source base station to the target base station, to form the target path for transmitting service data between the terminal device and a core network, wherein, an anchor point of the target path is an anchor base station directly communicating with the core network in the target path.

The transceiver unit 720 is used for transmitting the service data received from the terminal device to the core network through the target path, or transmitting the service data received from the core network to the terminal device through the target path.

Therefore, after the terminal device completes the handover from the source base station to the target base station, the target base station performs the path extension through the logical direct connection interface between the target base station and other base stations to form the target path for transmitting the service data, so that the anchor point of the target path is the anchor base station directly communicating with the core network in the target path. Thereby, the service data is transmitted between the terminal device and the core network through the anchor base station no matter how the terminal device performs a handover between the base stations, thus avoiding large signaling overhead generated between the base station and the core network during the path switch.

In at least one implementation, the first base station is the source base station.

In at least one implementation, the first base station is the anchor base station.

In at least one implementation, the processing unit 710 is specifically used for performing the path extension when an extension condition is satisfied, wherein the extension condition includes at least one of the following conditions: the target base station and the source base station both connect with the same core network device; the number of hops of the target base station relative to the anchor base station in the target path does not exceed a preset threshold; the time point at which the target base station performs the path extension is within the preset time period; and the target base station is located in the preset area range.

In at least one implementation, the processing unit 710 is further used for receiving configuration information sent by a mobility management entity (MME) or an AMF, wherein the configuration information includes the extension condition; or acquiring the extension condition according to an operation administration and maintenance (OAM) mode.

In at least one implementation, the processing unit 710 is further used for determining that a connection on the logical direct connection interface has been established between the target base station and the first base station before the path extension is performed based on the logical direct connection interface between the target base station and the first base station.

In at least one implementation, the processing unit 710 is specifically used for sending a request message to the first base station through the transceiver unit 720, wherein the request message is used for requesting the path extension; receiving a feedback message sent by the first base station through the transceiver unit 720, wherein the feedback message is used for indicating that the path extension is completed.

In at least one implementation, the logical direct connection interface is an X2 interface or an Xn interface.

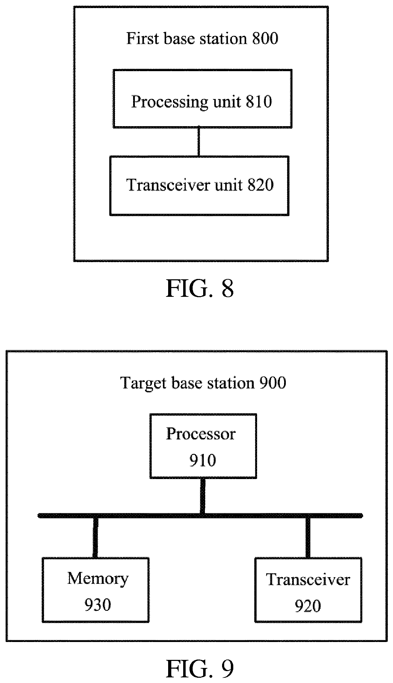

FIG. 8 is a schematic block diagram of a first base station 800 according to an embodiment of the present application. The first base station 800 includes a processing unit 810 and a transceiver unit 820.

The processing unit 810 is used for: after a terminal device completes a handover from a source base station to a target base station, performing a path extension based on a logical direct connection interface between the first base station and the target base station to form a target path for transmitting service data between the terminal device and a core network, wherein an anchor point of the target path is an anchor base station directly communicating with the core network in the target path.

The transceiver unit 820 is used for transmitting the service data from the terminal device received from the target base station to the core network through the target path, or transmitting the service data received from the core network to the target base station through the target path, to make the target base station transmit the service data to the terminal device.

Therefore, after the terminal device completes the handover from the source base station to the target base station, the first base station performs the path extension through the logical direct connection interface between the first base station and the target base station to form the target path for transmitting the service data, so that the anchor point of the target path is the anchor base station directly communicating with the core network in the target path. Thereby, the service data is transmitted between the terminal device and the core network through the anchor base station no matter how the terminal device performs a handover between the base stations, thus avoiding large signaling overhead generated between the base station and the core network during the path switch.

In at least one implementation, the first base station is the source base station.

In at least one implementation, the first base station is the anchor base station.

In at least one implementation, the transceiver unit 820 is further used for receiving the request message sent by the target base station, wherein the request message is used for requesting the path extension. Wherein the processing unit 810 is specifically used for performing the path extension based on the logical direct connection interface between the first base station and the target base station according to the request message.

In at least one implementation, the processing unit 810 is specifically used for performing the path extension when an extension condition is satisfied. Wherein the extension condition includes at least one of the following conditions: the target base station and the source base station both connect with the same core network device; the number of hops of the target base station relative to the anchor base station in the target path does not exceed a preset threshold; a time point at which the target base station performs the path extension is within a preset time period; the target base station is located in the preset area range.

In at least one implementation, the transceiver unit 820 is further used for receiving configuration information sent by a mobility management entity (MME) or an AMF, wherein the configuration information includes the extension condition; or acquiring the extension condition according to an operation administration and maintenance (OAM) mode.

In at least one implementation, the processing unit 810 is further used for determining that a connection on the logical direct connection interface has been established between the first base station and the target base station before the path extension is performed based on the logical direct connection interface between the first base station and the target base station.

In at least one implementation, the processing unit 810 is specifically used for updating the context of the terminal device; sending feedback information to the target base station through the transceiver unit 820, wherein the feedback information is used for indicating that the path extension is completed.

In at least one implementation, the processing unit 810 is specifically used for releasing parameters related to radio resource control (RRC) operation of the terminal device and retaining parameters related to user plane of general packet radio service (GPRS) tunnel protocol (GTP-U) of the logical direct connection interface.

In at least one implementation, the logical direct connection interface is an X2 interface or an Xn interface.

FIG. 9 is a schematic structural diagram of a target base station 900 according to an embodiment of the present application. As shown in FIG. 9, the target base station includes a processor 910, a transceiver 920, and a memory 930, wherein the processor 910, the transceiver 920, and the memory 930 communicate with each other through an internal connection path. The memory 930 is used for storing instructions, and the processor 910 is used for executing the instructions stored in the memory 930 to control the transceiver 920 to send or receive signals.

The processor 910 is used for performing a path extension based on a logical direct connection interface between a target base station and a first base station to form a target path for transmitting service data between a terminal device and a core network after the terminal device completes a handover from a source base station to the target base station. Wherein an anchor point of the target path is an anchor base station directly communicating with the core network in the target path.

The transceiver 920 is used for transmitting the service data received from the terminal device to the core network through the target path, or transmitting the service data received from the core network to the terminal device through the target path.

Therefore, after the terminal device completes the handover from the source base station to the target base station, the target base station performs the path extension through the logical direct connection interface between the target base station and other base stations to form the target path for transmitting the service data, so that the anchor point of the target path is the anchor base station directly communicating with the core network in the target path. Thereby, the service data is transmitted between the terminal device and the core network through the anchor base station no matter how the terminal device performs a handover between the base stations, thus avoiding large signaling overhead generated between the base station and the core network during the path switch.

In at least one implementation, the first base station is the source base station.

In at least one implementation, the first base station is the anchor base station.

In at least one implementation, the processor 910 is specifically used for performing the path extension when the extension condition is satisfied. Wherein the extension condition includes at least one of the following conditions: the target base station and the source base station both connect with the same core network device; the number of hops of the target base station relative to the anchor base station in the target path does not exceed a preset threshold; a time point at which the target base station performs the path extension is within a preset time period; the target base station is located in a preset area range.

In at least one implementation, the processor 910 is further used for receiving configuration information sent by a mobility management entity (MME) or an AMF, the configuration information includes the extension condition; or acquiring the extension condition according to an operation administration and maintenance (OAM) mode.

In at least one implementation, the processor 910 is further used for determining that a connection on the logical direct connection interface has been established between the target base station and the first base station before the path extension is performed based on the logical direct connection interface between the target base station and the first base station.

In at least one implementation, the processor 910 is specifically used for sending a request message to the first base station through the transceiver 920, wherein the request message is used for requesting the path extension; receiving a feedback message sent by the first base station through the transceiver 920, wherein the feedback message is used for indicating that the path extension is completed.

In at least one implementation, the logical direct connection interface is an X2 interface or an Xn interface.

It should be understood that in an embodiment of the present application, the processor 910 may be a Central Processing Unit (CPU), or the processor 910 may be other general purpose processors, Digital Signal Processors (DSP), Application Specific Integrated Circuits (ASIC), Field Programmable Gate Arrays (FPGA) or other programmable logic devices, discrete gate or transistor logic devices, discrete hardware components, etc. The general purpose processor may be a microprocessor or the processor may be any conventional processor or the like.

The memory 930 may include a read only memory and a random access memory, and provide instructions and data to the processor 910. A portion of the memory 930 may include a non-volatile random access memory.

In an implementation process, the acts of the methods described above may be accomplished by integrated logic circuits of hardware in the processor 910 or instructions in a form of software. The acts of the path switch method disclosed in an embodiment of the present application may be directly accomplished by an execution of a hardware processor or accomplished by a combination of hardware and software modules in the processor 910. The software modules may be located in a storage medium commonly used in the art, such as a random access memory, flash memory, read-only memory, programmable read-only memory or electrically erasable programmable memory, or register. The storage medium is located in the memory 930, and the processor 910 reads the information in the memory 930 and accomplishes the acts of the above method in combination with its hardware. In order to avoid repetition, it will not be described in detail here.

The target base station 900 according to an embodiment of the present application may correspond to the target base station for executing the method 300 in the method 300 and the target base station 700 according to an embodiment of the present application, and various units or modules in the target base station 900 are respectively used for executing various actions or processing processes executed by the target base station in the method 300, here, in order to avoid redundancy, detailed description thereof is omitted.

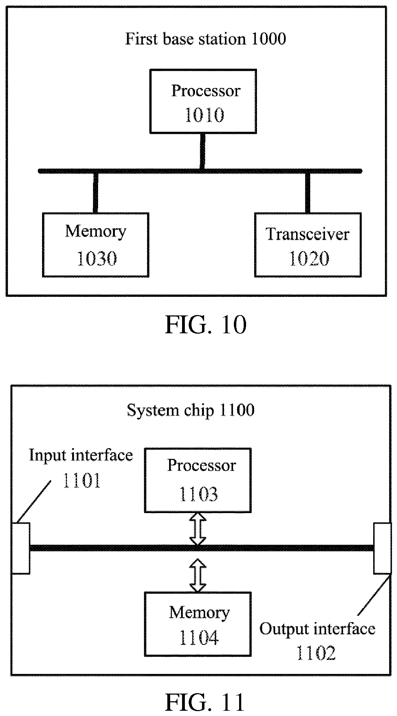

FIG. 10 is a schematic structural diagram of a first base station 1000 according to an embodiment of the present application. As shown in FIG. 10, the first base station includes a processor 1010, a transceiver 1020, and a memory 1030, wherein the processor 1010, the transceiver 1020, and the memory 1030 communicate with each other through an internal connection path. The memory 1030 is used for storing instructions, and the processor 1010 is used for executing the instructions stored in the memory 1030 to control the transceiver 1020 to send or receive signals.

The processor 1010 is used for: after a terminal device completes a handover from a source base station to a target base station, performing a path extension based on a logical direct connection interface between the first base station and the target base station to form a target path for transmitting service data between the terminal device and a core network, wherein an anchor point of the target path is an anchor base station directly communicating with the core network in the target path.

The transceiver 1020 is used for transmitting the service data of the terminal device received from the target base station to the core network through the target path, or transmitting the service data received from the core network to the target base station through the target path to make the target base station transmit the service data to the terminal device.

Therefore, after the terminal device completes the handover from the source base station to the target base station, the first base station performs the path extension through the logical direct connection interface between the first base station and the target base station to form the target path for transmitting the service data, so that the anchor point of the target path is the anchor base station directly communicating with the core network in the target path. Thereby, the service data is transmitted between the terminal device and the core network through the anchor base station no matter how the terminal device performs a handover between the base stations, thus avoiding large signaling overhead generated between the base station and the core network during the path switch.

In at least one implementation, the first base station is the source base station.

In at least one implementation, the first base station is the anchor base station.

In at least one implementation, the transceiver 1020 is further used for receiving a request message sent by the target base station, wherein the request message is used for requesting the path extension; wherein, the processor 1010 is specifically used for performing the path extension based on the logical direct connection interface between the first base station and the target base station according to the request message.

In at least one implementation, the processor 1010 is specifically used for performing the path extension when an extension condition is satisfied, wherein the extension condition includes at least one of the following conditions: the target base station and the source base station both connect with the same core network device; the number of hops of the target base station relative to the anchor base station in the target path does not exceed a preset threshold; a time point at which the target base station performs the path extension is within the preset time period; and the target base station is located in the preset area range.

In at least one implementation, the transceiver 1020 is further used for receiving configuration information sent by a mobility management entity (MME) or an AMF, wherein the configuration information includes the extension condition; or acquiring the extension condition according to an operation administration and maintenance (OAM) mode.

In at least one implementation, the processor 1010 is further used for determining that a connection on the logical direct connection has been established between the first base station and the target base station before the path extension is performed based on the logical direct connection interface between the first base station and the target base station.

In at least one implementation, the processor 1010 is specifically used for updating a context of the terminal device; and sending feedback information to the target base station through the transceiver 1020, wherein the feedback information is used for indicating that the path extension is completed.

In at least one implementation, the processor 1010 is specifically used for releasing parameters related to radio resource control (RRC) operation of the terminal device and retaining parameters related to user plane of general packet radio service (GPRS) tunnel protocol (GTP-U) of the logical direct connection interface.

In at least one implementation, the logical direct connection interface is an X2 interface or an Xn interface.

It should be understood that in an embodiment of the present application, the processor 1010 may be a Central Processing Unit (CPU), or the processor 1010 may be other general purpose processors, Digital Signal Processors (DSP), Application Specific Integrated Circuits (ASIC), Field Programmable Gate Arrays (FPGA) or other programmable logic devices, discrete gate or transistor logic devices, discrete hardware components, etc. The general purpose processor may be a microprocessor or the processor may be any conventional processor or the like.

The memory 1030 may include a read only memory and a random access memory, and provide instructions and data to the processor 1010. A portion of memory 1030 may include non-volatile random access memory. In an implementation process, the acts of the methods described above may be accomplished by integrated logic circuits of hardware in the processor 1010 or instructions in a form of software. The acts of the path switch method disclosed in an embodiment of the present application may be directly accomplished by an execution of a hardware processor or accomplished by a combination of hardware and software modules in the processor 1010. The software modules may be located in a storage medium commonly used in the art, such as a random access memory, flash memory, read-only memory, programmable read-only memory or electrically erasable programmable memory, or register. The storage medium is located in the memory 1030, and the processor 1010 reads the information in the memory 1030 and accomplishes the acts of the above method in combination with its hardware. In order to avoid repetition, it will not be described in detail here.

The first base station 1000 according to an embodiment of the present application may correspond to the first base station for executing the method 600 in the method 600 and the first base station 800 according to an embodiment of the present application, and various units or modules in the first base station 1000 are respectively used for executing various actions or processing processes executed by the network device in the method 600. Here, in order to avoid redundancy, detailed description thereof is omitted.

FIG. 11 is a schematic structural diagram of a system chip according to an embodiment of the present application. The system chip 1100 of FIG. 11 includes an input interface 1101, an output interface 1102, at least one processor 1103, and a memory 1104. The input interface 1101, the output interface 1102, the processor 1103, and the memory 1104 are connected to each other through an internal connection path. The processor 1103 is used for executing codes in the memory 1104.

In at least one implementation, the processor 1103 may implement the method 300 executed by the target base station in the method embodiment when the codes are executed. For the sake of conciseness, it will not be repeated here.

In at least one implementation, the processor 1103 may implement the method 600 executed by the first base station in the method embodiment when the codes are executed. For the sake of conciseness, it will not be repeated here.

Those ordinary skilled in the art will recognize that exemplary units and algorithm acts described in connection with the embodiments disclosed here may be implemented in electronic hardware, or a combination of computer software and electronic hardware. Whether these functions are implemented in hardware or software depends on a specific application and design constraint of the technical solution. The skilled in the art may use different manners to realize the described functions for each particular application, but such realization should not be considered to be beyond the scope of the present application.

Those skilled in the art may clearly understand that for convenience and conciseness of description, the specific working processes of the system, device and unit described above may refer to the corresponding processes in the aforementioned embodiments of methods, which will not be repeated here.

In several embodiments provided by the present application, it should be understood that the disclosed system, device and method may be implemented in other ways. For example, the apparatus embodiment described above is only illustrative. For example, the division of the unit is only a logical function division, and there may be other ways of division in actual implementation. For example, multiple units or components may be combined or integrated into another system, or some features may be ignored or not executed. On the other hand, the mutual coupling or direct coupling or communication connection shown or discussed may be indirect coupling or communication connection through some interfaces, devices or units, and may be in electrical, mechanical or other forms.

The unit described as a separate component may or may not be physically separated, and the component shown as a unit may or may not be a physical unit, i.e., may be located in one place or may be distributed over multiple network units. Some or all of the units may be selected according to practical needs to achieve a purpose of the solution of the embodiments.

In addition, various functional units in various embodiments of the present application may be integrated in one monitoring unit, or various units may be physically present separately, or two or more units may be integrated in one unit.

The functions may be stored in a computer readable storage medium if implemented in a form of software functional units and sold or used as a separate product. Based on this understanding, the technical solution of the present application, in essence, or the part contributing to the existing art, or the part of the technical solution, may be embodied in the form of a software product stored in a storage medium, including several instructions for causing a computer device (which may be a personal computer, a server, or a network device, etc.) to perform all or part of the acts of the methods described in various embodiments of the present application. The aforementioned storage medium includes various media capable of storing program codes, such as a U disk, a mobile hard disk, a read-only memory (ROM), a random access memory (RAM), a magnetic disk, or an optical disk.

What are described above are merely specific embodiments of the present application, but the protection scope of embodiments of the present application is not limited thereto. Any variation or substitution that may be easily conceived by a person skilled in the art within the technical scope disclosed by the embodiments of the present application shall be included within the protection scope of the embodiments of the present application. Therefore, the protection scope of the embodiments of the present application should be subject to the protection scope of the claims.

## Claims

1. A path switch method, comprising:
in a condition that there are a source base station, an anchor base station and a target base station, after a terminal device completes a handover from the source base station to the target base station, performing, by the target base station, a path extension based on a logical direct connection interface between the target base station and the source base station, to form a target path for transmitting service data between the terminal device and a core network, wherein an anchor point of the target path is the anchor base station directly communicating with the core network in the target path (310); and
transmitting, by the target base station, the service data received from the terminal device to the core network through the target path, or transmitting the service data received from the core network to the terminal device through the target path (320),
**characterized in that**,
performing, by the target base station, the path extension based on the logical direct connection interface between the target base station and the source base station (310), comprises:
when an extension condition is satisfied, performing, by the target base station, the path extension, wherein the extension condition comprises at least one of following conditions:
a number of hops of the target base station relative to the anchor base station in the target path does not exceed a preset threshold;
a time point at which the target base station performs the path extension is within a preset time period.

2. The method of claim 1, wherein before the target base station performs the path extension based on the logical direct connection interface between the target base station and the source base station (310), the method further comprises:
receiving, by the target base station, configuration information sent by a mobility management entity, MME, or an access and mobility management function, AMF, wherein the configuration information comprises the extension condition; or,
acquiring, by the target base station, the extension condition according to an operation administration and maintenance, OAM, mode.

3. The method of claim 1 or 2, wherein before the target base station performs the path extension based on the logical direct connection interface between the target base station and the source base station (310), the method further comprises:
determining, by the target base station, that a connection on the logical direct connection interface has been established between the target base station and the source base station.

4. The method of any one of claims 1 to 3, wherein performing, by the target base station, the path extension based on the logical direct connection interface between the target base station and the source base station (310), comprises:
sending, by the target base station, a request message to the source base station, wherein the request message is used for requesting the path extension; and
receiving, by the target base station, a feedback message sent by the source base station, wherein the feedback message is used for indicating that the path extension is completed.

5. A path switch method, comprising:
in a condition that there are a source base station, an anchor base station and a target base station, after a terminal device completes a handover from the source base station to the target base station, performing, by the source base station, a path extension based on a logical direct connection interface between the source base station and the target base station, to form a target path for transmitting service data between the terminal device and a core network, wherein an anchor point of the target path is the anchor base station directly communicating with the core network in the target path (610); and
transmitting, by the source base station, the service data of the terminal device received from the target base station to the core network through the target path, or transmitting the service data from the core network to the target base station through the target path, to make the target base station transmit the service data to the terminal device (620),
**characterized in that**,
performing, by the source base station, the path extension based on the logical direct connection interface between the source base station and the target base station, comprises:
when an extension condition is satisfied, performing, by the source base station, the path extension, wherein the extension condition comprises at least one of following conditions:
a number of hops of the target base station relative to the anchor base station in the target path does not exceed a preset threshold; and
a time point at which the target base station performs the path extension is within a preset time period.

6. The method of claim 5, wherein before the source base station performs the path extension based on the logical direct connection interface between the source base station and the target base station (610), the method further comprises:
receiving, by the source base station, a request message sent by the target base station, wherein the request message is used for requesting the path extension;
wherein, performing, by the source base station, the path extension based on the logical direct connection interface between the source base station and the target base station, comprises:
performing, by the source base station, the path extension based on the logical direct connection interface between the source base station and the target base station according to the request message.

7. The method of claim 5 or 6, wherein before the source base station performs the path extension based on the logical direct connection interface between the source base station and the target base station (610), the method further comprises:
receiving, by the source base station, configuration information sent by a mobility management entity, MME, or an access and mobility management function, AMF, wherein the configuration information comprises the extension condition; or,
acquiring, by the source base station, the extension condition according to an operation administration and maintenance, OAM, mode.

8. The method of any one of claims 5 to 7, wherein before the source base station performs the path extension based on the logical direct connection interface between the source base station and the target base station (610), the method further comprises:
determining, by the source base station, that a connection on the logical direct connection interface has been established between the source base station and the target base station.

9. The method of any one of claims 5 to 8, wherein performing, by the source base station, the path extension based on the logical direct connection interface between the source base station and the target base station (610), comprises:
updating, by the source base station, a context of the terminal device (506); and
sending, by the source base station, feedback information to the target base station, wherein the feedback information is used for indicating that the path extension is completed (507).

10. The method of claim 9, wherein updating, by the source base station, the context of the terminal device (506), comprises:
releasing, by the source base station, parameters related to radio resource control, RRC, operation of the terminal device, and retaining parameters related to user plane of general packet radio service, GPRS, tunnel protocol, GTP-U, of the logical direct connection interface.

11. A base station, configured to execute the method of any one of claims 1 to 4.

12. A base station, configured to execute the method of any one of claims 5 to 10.

## Patentansprüche

1. Pfadvermittlungsverfahren, das Folgendes umfasst:
unter der Bedingung, dass eine Quellbasisstation, eine Ankerbasisstation und eine Zielbasisstation vorhanden sind, und nachdem eine Endgerätvorrichtung eine Weiterreichung von der Quellbasisstation zu der Zielbasisstation abgeschlossen hat, Ausführen (310) durch die Zielbasisstation einer Pfaderweiterung auf der Grundlage einer logischen Direktverbindungsschnittstelle zwischen der Zielbasisstation und der Quellbasisstation, um einen Zielpfad zum Senden von Dienstdaten zwischen der Endgerätvorrichtung und einem Kernnetz zu bilden, wobei ein Ankerpunkt des Zielpfades die Ankerbasisstation ist, die in dem Zielpfad direkt mit dem Kernnetz kommuniziert; und
Senden durch die Zielbasisstation der von der Endgerätvorrichtung empfangenen Dienstdaten zu dem Kernnetz auf dem Zielpfad oder Senden der von dem Kernnetz empfangenen Dienstdaten zu der Endgerätvorrichtung auf dem Zielpfad (320),
**dadurch gekennzeichnet, dass**
das Ausführen (310) durch die Zielbasisstation der Pfaderweiterung auf der Grundlage der logischen Direktverbindungsschnittstelle zwischen der Zielbasisstation und der Quellbasisstation Folgendes umfasst:
wenn eine Erweiterungsbedingung erfüllt ist, Ausführen durch die Zielbasisstation der Pfaderweiterung, wobei die Erweiterungsbedingung wenigstens eine der folgenden Bedingungen enthält:
eine Anzahl von Sprüngen der Zielbasisstation in Bezug auf die Ankerbasisstation in dem Zielpfad überschreitet einen im Voraus festgelegten Schwellenwert nicht; und
ein Zeitpunkt, zu dem die Zielbasisstation die Pfaderweiterung ausführt, liegt in einer im Voraus festgelegten Zeitperiode.

2. Verfahren nach Anspruch 1, wobei das Verfahren, bevor die Zielbasisstation die Pfaderweiterung auf der Grundlage der logischen Direktverbindungsschnittstelle zwischen der Zielbasisstation und der Quellbasisstation ausführt (310), ferner Folgendes umfasst:
Empfangen durch die Zielbasisstation von Konfigurationsinformationen, die durch eine Mobilitätsmanagemententität, MME, oder durch eine Zugriffs- und Mobilitätsmanagementfunktion, AMF, gesendet werden, wobei die Konfigurationsinformationen die Erweiterungsbedingung enthalten; oder
Erfassen durch die Zielbasisstation der Erweiterungsbedingung in Übereinstimmung mit einem Betriebsadministrations- und Wartungsmodus, OAM.

3. Verfahren nach Anspruch 1 oder 2, wobei das Verfahren, bevor die Zielbasisstation die Pfaderweiterung auf der Grundlage der logischen Direktverbindungsschnittstelle zwischen der Zielbasisstation und der Quellbasisstation ausführt (310), ferner Folgendes umfasst:
Bestimmen durch die Zielbasisstation, dass eine Verbindung auf der logischen Direktverbindungsschnittstelle zwischen der Zielbasisstation und der Quellbasisstation aufgebaut worden ist.

4. Verfahren nach einem der Ansprüche 1 bis 3, wobei das Ausführen (310) durch die Zielbasisstation der Pfaderweiterung auf der Grundlage der logischen Direktverbindungsschnittstelle zwischen der Zielbasisstation und der Quellbasisstation Folgendes umfasst:
Senden durch die Zielbasisstation einer Anforderungsnachricht zu der Quellbasisstation, wobei die Anforderungsnachricht verwendet wird, um die Pfaderweiterung anzufordern; und
Empfangen durch die Zielbasisstation einer Rückmeldungsnachricht, die durch die Quellbasisstation gesendet wird, wobei die Rückmeldungsnachricht verwendet wird, um anzugeben, dass die Pfaderweiterung abgeschlossen worden ist.

5. Pfadvermittlungsverfahren, das Folgendes umfasst:
unter der Bedingung, dass eine Quellbasisstation, eine Ankerbasisstation und eine Zielbasisstation vorhanden sind, und nachdem eine Endgerätvorrichtung eine Weiterreichung von der Quellbasisstation zu der Zielbasisstation abgeschlossen hat, Ausführen (610) durch die Quellbasisstation einer Pfaderweiterung auf der Grundlage einer logischen Direktverbindungsschnittstelle zwischen der Quellbasisstation und der Zielbasisstation, um einen Zielpfad zum Senden von Dienstdaten zwischen der Endgerätvorrichtung und einem Kernnetz zu bilden, wobei ein Ankerpunkt des Zielpfades die Ankerbasisstation ist, die in dem Zielpfad direkt mit dem Kernnetz kommuniziert; und
Senden durch die Quellbasisstation der Dienstdaten der Endgerätvorrichtung, die von der Zielbasisstation empfangen werden, zu dem Kernnetz auf dem Zielpfad oder Senden der Dienstdaten von dem Kernnetz zu der Zielbasisstation auf dem Zielpfad, um die Zielbasisstation zu veranlassen, die Dienstdaten zu der Endgerätvorrichtung senden (620),
**dadurch gekennzeichnet, dass**
das Ausführen durch die Quellbasisstation der Pfaderweiterung auf der Grundlage der logischen Direktverbindungsschnittstelle zwischen der Quellbasisstation und der Zielbasisstation Folgendes umfasst:
dann, wenn eine Erweiterungsbedingung erfüllt ist, Ausführen durch die Quellbasisstation der Pfaderweiterung, wobei die Erweiterungsbedingung wenigstens eine der folgenden Bedingungen enthält:
eine Anzahl von Sprüngen der Zielbasisstation in Bezug auf die Ankerbasisstation in dem Zielpfad überschreitet einen im Voraus festgelegten Schwellenwert nicht; und
ein Zeitpunkt, zu dem die Zielbasisstation die Pfaderweiterung ausführt, liegt in einer im Voraus festgelegten Zeitperiode.

6. Verfahren nach Anspruch 5, wobei das Verfahren, bevor die Quellbasisstation die Pfaderweiterung auf der Grundlage der logischen Direktverbindungsschnittstelle zwischen der Quellbasisstation und der Zielbasisstation ausführt (610), Folgendes umfasst:
Empfangen durch die Quellbasisstation einer Anforderungsnachricht, die durch die Zielbasisstation gesendet wird, wobei die Anforderungsnachricht verwendet wird, um die Pfaderweiterung anzufordern;
wobei das Ausführen durch die Quellbasisstation der Pfaderweiterung auf der Grundlage der logischen Direktverbindungsschnittstelle zwischen der Quellbasisstation und der Zielbasisstation Folgendes umfasst:
Ausführen durch die Quellbasisstation der Pfaderweiterung auf der Grundlage der logischen Direktverbindungsschnittstelle zwischen der Quellbasisstation und der Zielbasisstation in Übereinstimmung mit der Anforderungsnachricht.

7. Verfahren nach Anspruch 5 oder 6, wobei das Verfahren, bevor die Quellbasisstation die Pfaderweiterung auf der Grundlage der logischen Direktverbindungsschnittstelle zwischen der Quellbasisstation und der Zielbasisstation ausführt (610), ferner Folgendes umfasst:
Empfangen durch die Quellbasisstation von Konfigurationsinformationen, die durch eine Mobilitätsmanagemententität, MME, oder durch eine Zugriffs- und Mobilitätsmanagementfunktion, AMF, gesendet werden, wobei die Konfigurationsinformationen die Erweiterungsbedingung enthalten; oder
Erfassen durch die Quellbasisstation der Erweiterungsbedingung in Übereinstimmung mit einem Betriebsadministrations- und Wartungsmodus, OAM.

8. Verfahren nach einem der Ansprüche 5 bis 7, wobei das Verfahren, bevor die Quellbasisstation die Pfaderweiterung auf der Grundlage der logischen Direktverbindungsschnittstelle zwischen der Quellbasisstation und der Zielbasisstation ausführt (610), ferner Folgendes umfasst:
Bestimmen durch die Quellbasisstation, dass eine Verbindung auf der logischen Direktverbindungsschnittstelle zwischen der Quellbasisstation und der Zielbasisstation aufgebaut worden ist.

9. Verfahren nach einem der Ansprüche 5 bis 8, wobei das Ausführen (610) durch die Quellbasisstation der Pfaderweiterung auf der Grundlage der logischen Direktverbindungsschnittstelle zwischen der Quellbasisstation und der Zielbasisstation Folgendes umfasst:
Aktualisieren (506) durch die Quellbasisstation eines Kontexts der Endgerätvorrichtung; und
Senden (507) durch die Quellbasisstation von Rückmeldungsinformationen zu der Zielbasisstation, wobei die Rückmeldungsinformationen verwendet werden, um anzugeben, dass die Pfaderweiterung abgeschlossen worden ist.

10. Verfahren nach Anspruch 9, wobei das Aktualisieren durch die Quellbasisstation des Kontexts der Endgerätvorrichtung (506) Folgendes umfasst:
Aufgeben durch die Quellbasisstation von Parametern, die mit einem Funkbetriebsmittelsteuerungsbetrieb, RRC-Betrieb, der Endgerätvorrichtung in Beziehung stehen, und Beibehalten von Parametern, die mit einer Anwenderebene eines allgemeinen Paketfunkdienst-Tunnelprotokolls, GPRS-GTP-U, der logischen Direktverbindungsschnittstelle in Beziehung stehen.

11. Basisstation, die konfiguriert ist, das Verfahren nach einem der Ansprüche 1 bis 4 auszuführen.

12. Basisstation, die konfiguriert ist, das Verfahren nach einem der Ansprüche 5 bis 10 auszuführen.

## Revendications

1. Procédé de commutation de chemin, comprenant :
dans une situation impliquant une station de base source, une station de base d'ancrage et une station de base cible, après qu'un dispositif terminal a réalisé un transfert de la station de base source à la station de base cible, la réalisation, par la station de base cible, d'une extension de chemin basée sur une interface de connexion directe logique entre la station de base cible et la station de base source, afin de former un chemin cible pour transmettre des données de service entre le dispositif terminal et un réseau central, dans lequel un point d'ancrage du chemin cible est la station de base d'ancrage communiquant directement avec le réseau central dans le chemin cible (310) ; et
la transmission, par la station de base cible, des données de service reçues à partir du dispositif terminal au réseau central par le biais du chemin cible, ou la transmission des données de service reçues à partir du réseau central au dispositif terminal par le biais du chemin cible (320),
**caractérisé en ce que**,
la réalisation, par la station de base cible, de l'extension de chemin basée sur l'interface de connexion directe logique entre la station de base cible et la station de base source (310), comprend :
lorsqu'une condition d'extension est satisfaite, la réalisation, par la station de base cible, de l'extension de chemin, la condition d'extension comprenant au moins une des conditions suivantes :
un nombre de sauts de la station de base cible par rapport à la station de base d'ancrage dans le chemin cible ne dépasse pas un seuil prédéfini ;
un point temporel auquel la station de base cible réalise l'extension de chemin est compris dans une période de temps prédéfinie.

2. Procédé selon la revendication 1, le procédé comprenant en outre, avant que la station de base cible ne réalise l'extension de chemin basée sur l'interface de connexion directe logique entre la station de base cible et la station de base source (310) :
la réception, par la station de base cible, d'informations de configuration envoyées par une entité de gestion de mobilité, MME, ou une fonction de gestion d'accès et de mobilité, AMF, les informations de configuration comprenant la condition d'extension ; ou
l'acquisition, par la station de base cible, de la condition d'extension conformément à un mode d'opérations, administration et maintenance, OAM.

3. Procédé selon la revendication 1 ou 2, le procédé comprenant en outre, avant que la station de base cible ne réalise l'extension de chemin basée sur l'interface de connexion directe logique entre la station de base cible et la station de base source (310) :
la détermination, par la station de base cible, qu'une connexion sur l'interface de connexion directe logique a été établie entre la station de base cible et la station de base source.

4. Procédé selon l'une quelconque des revendications 1 à 3, dans lequel la réalisation, par la station de base cible, de l'extension de chemin basée sur l'interface de connexion directe logique entre la station de base cible et la station de base source (310), comprend :
l'envoi, par la station de base cible, d'un message de demande à la station de base source, le message de demande servant à demander l'extension de chemin ; et
la réception, par la station de base cible, d'un message de retour envoyé par la station de base source, le message de retour servant à indiquer que l'extension de chemin est terminée.

5. Procédé de commutation de chemin, comprenant :
dans une situation impliquant une station de base source, une station de base d'ancrage et une station de base cible, après qu'un dispositif terminal a réalisé un transfert de la station de base source à la station de base cible, la réalisation, par la station de base source, d'une extension de chemin basée sur une interface de connexion directe logique entre la station de base source et la station de base cible, afin de former un chemin cible pour transmettre des données de service entre le dispositif terminal et un réseau central, dans lequel un point d'ancrage du chemin cible est la station de base d'ancrage communiquant directement avec le réseau central dans le chemin cible (610) ; et
la transmission, par la station de base source, des données de service du dispositif terminal reçues à partir de la station de base cible au réseau central par le biais du chemin cible, ou la transmission des données de service du réseau central à la station de base cible par le biais du chemin cible, pour faire en sorte que la station de base cible transmette les données de service au dispositif terminal (620),
**caractérisé en ce que**,
la réalisation, par la station de base source, de l'extension de chemin basée sur l'interface de connexion directe logique entre la station de base source et la station de base cible, comprend :
lorsqu'une condition d'extension est satisfaite, la réalisation, par la station de base source, de l'extension de chemin extension, la condition d'extension comprenant au moins une des conditions suivantes :
un nombre de sauts de la station de base cible par rapport à la station de base d'ancrage dans le chemin cible ne dépasse pas un seuil prédéfini ; et
un point temporel auquel la station de base cible réalise l'extension de chemin est compris dans une période de temps prédéfinie.

6. Procédé selon la revendication 5, le procédé comprenant en outre, avant que la station de base source ne réalise l'extension de chemin basée sur l'interface de connexion directe logique entre la station de base source et la station de base cible (610) :
la réception, par la station de base source, d'un message de demande envoyé par la station de base cible, le message de demande servant à demander l'extension de chemin ;
dans lequel, la réalisation, par la station de base source, de l'extension de chemin basée sur l'interface de connexion directe logique entre la station de base source et la station de base cible, comprend :
la réalisation, par la station de base source, de l'extension de chemin basée sur l'interface de connexion directe logique entre la station de base source et la station de base cible conformément au message de demande.

7. Procédé selon la revendication 5 ou 6, le procédé comprenant en outre, avant que la station de base source n'effectue l'extension de chemin basée sur l'interface de connexion directe logique entre la station de base source et la station de base cible (610) :
la réception, par la station de base source, d'informations de configuration envoyées par une entité de gestion de mobilité, MME, ou une fonction de gestion d'accès et de mobilité, AMF, les informations de configuration comprenant la condition d'extension ; ou
l'acquisition, par la station de base source, de la condition d'extension selon un mode d'opérations, administration et maintenance, OAM.

8. Procédé selon l'une quelconque des revendications 5 à 7, le procédé comprenant en outre, avant que la station de base source ne réalise l'extension de chemin basée sur l'interface de connexion directe logique entre la station de base source et la station de base cible (610) :
la détermination, par la station de base source, qu'une connexion sur l'interface de connexion directe logique a été établie entre la station de base source et la station de base cible.

9. Procédé selon l'une quelconque des revendications 5 à 8, dans lequel la réalisation, par la station de base source, de l'extension de chemin basée sur l'interface de connexion directe logique entre la station de base source et la station de base cible (610), comprend :
la mise à jour, par la station de base source, d'un contexte du dispositif terminal (506) ; et
l'envoi, par la station de base source, d'informations de retour à la station de base cible, les informations de retour servant à indiquer que l'extension de chemin est terminée (507).

10. Procédé selon la revendication 9, dans lequel la mise à jour, par la station de base source, du contexte du dispositif terminal (506), comprend :
la libération, par la station de base source, de paramètres liés à une opération de commande de ressources radio, RRC, du dispositif terminal et la conservation de paramètres liés au plan utilisateur d'un protocole de tunnel de service radio par paquets général, GPRS, GTP-U, de l'interface de connexion directe logique.

11. Station de base, configurée pour exécuter le procédé selon l'une quelconque des revendications 1 à 4.

12. Station de base, configurée pour exécuter le procédé selon l'une quelconque des revendications 5 à 10.
